# FASCICULE DE BREVET EUROPEEN

(11) **EP 4 244 076 B1**
(45) Date de publication et mention de la délivrance du brevet: **14.10.2026**
(21) Numéro de dépôt: 21805569.7
(22) Date de dépôt: 15.10.2021
(51) Int. Cl.: B60C 1/00, C08J 11/10, C08K 5/01, C08L 57/02

(54) **PROCÉDÉ DE PRODUCTION DE RÉSINES À PARTIR DE COPEAUX DE CAOUTCHOUC**
VERFAHREN ZUR HERSTELLUNG VON HARZEN AUS KAUTSCHUKSCHNITZELN
METHOD FOR PRODUCING RESINS FROM RUBBER CHIPS

(30) Priorité: 16.11.2020 FR 2011696
(43) Date de publication de la demande: 20.09.2023
(73) Titulaire: COMPAGNIE GENERALE DES ETABLISSEMENTS MICHELIN, 63000 Clermont-Ferrand (FR)
(72) Inventeur: SUTTER, Marc, 63040 CLERMONT-FERRAND Cedex 9 (FR); BORGES, Pedro, 63040 CLERMONT-FERRAND Cedex 9 (FR)
(74) Mandataire: M.F.P. Michelin
(86) Numéro de dépôt international: PCT/FR2021/051794
(87) Numéro de publication internationale: WO 2022/101562

(56) Documents cités:
- US-A- 3 880 807
- CATALDO FRANCO: "Thermal depolymerization and pyrolysis of cis-1,4-polyisoprene: preparation of liquid polyisoprene and terpene resin", JOURNAL OF ANALYTICAL AND APPLIED PYROLYSIS, vol. 44, no. 2, 1 January 1998 (1998-01-01), NL, pages 121 - 130, XP055829412, ISSN: 0165-2370, DOI: 10.1016/S0165-2370(97)00081-8
- DANON B. ET AL: "A review of dipentene (dl-limonene) production from waste tire pyrolysis", JOURNAL OF ANALYTICAL AND APPLIED PYROLYSIS, vol. 112, 1 March 2015 (2015-03-01), NL, pages 1 - 13, XP055829418, ISSN: 0165-2370, DOI: 10.1016/j.jaap.2014.12.025
- CRANE GRANT ET AL: "Hydrocarbon Tackifying Resins Ex Scrap Tires", vol. 7, no. 4, 1 October 1975 (1975-10-01), GB, pages 372 - 379, XP055829265, ISSN: 0095-2443, Retrieved from the Internet <URL:http://journals.sagepub.com/doi/pdf/10.1177/009524437500700404> DOI: 10.1177/009524437500700404

## Description

### Domaine technique de l'invention

La présente invention est relative au domaine des procédés de recyclage des articles en caoutchouc.

### Art antérieur

Les bandages pneumatiques, et plus généralement les articles de caoutchouc tels que par exemple les bandes transporteuses et les bandages non pneumatiques, sont des objets complexes constitués d'une multitude de composants. À titre d'exemple, un bandage pneumatique est constitué de plus de 200 matières premières différentes.

Les enjeux en termes de pression sur les ressources renouvelables et fossiles sont tels qu'il est indispensable de valoriser au mieux les ressources que constituent les articles de caoutchouc usagés. Or le recyclage des matériaux issus d'articles de caoutchouc usagés, tels que des bandages usagés en bandages pneumatiques neufs est encore limité, du fait notamment de l'impact majeur des constituants sur les performances du pneumatique. En effet, le recyclage des matières peut avoir un impact environnemental global négatif du fait de la dégradation des performances des bandages pneumatiques utilisant ces matières. Il existe donc un besoin fort de procédés de valorisation des articles de caoutchouc en fin de vie afin de produire des matières premières dont l'utilisation ne dégradera pas les performances des bandages pneumatiques, conduisant ainsi à un impact environnemental globalement plus faible.

De nombreuses recherches ont été conduites dans ce domaine, en particulier sur la valorisation des huiles issues de la pyrolyse de résidus pneumatiques. Ainsi, les documents EP 0928817, WO 2013/170358 et JP2017/008214 enseignent la production de noir de carbone de grade pneumatique à partir de la pyrolyse de copeaux de bandages pneumatiques.

D'autres recherches portent sur la valorisation de produits intermédiaires. Le document WO 90/14409 s'intéresse à la séparation des huiles de pyrolyse de résidus pneumatiques par distillation afin de récupérer des composés chimiques valorisables, en particulier le limonène, la distillation étant opérée de manière à concentrer les espèces d'intérêt commercial. L'article « *Production of dl-limonene by vacuum pyrolysis of used tires* » enseigne quant à lui que la quantité de limonène dans les huiles de pyrolyse de copeaux de bandages pneumatiques peut être augmentée en ajustant la température de l'étape de pyrolyse et en minimisant le temps de séjour de la phase vapeur dans le réacteur. Le document « A review of dipentene (dl-limonene) production from waste tire pyrolysis » (Danon et al., Journal of Analytical and Applied Pyrolysis 112 (2015) 1-13) traite également de la production de dipentène à partir de résidus de pneumatiques. Aucun de ces documents ne traite de l'utilisation ultérieure de ces produits. Le document « Thermal depolymerization and pyrolysis of cis-1,4-polyisoprene : preparation of liquid polyisoprene and terpene resin" (Cataldo, Journal of Analytical and Applied Pyrolysis 44(1998) 121-130) traite de la production de résines à partir du produit de dépolymérisation d'isoprène pur, naturel ou synthétique. Cependant, la dépolymérisation de résidus de pneumatiques conduit à de nombreux sous-produits qui ne sont pas présents lors de la dépolymérisation de polyisoprène pur, dont l'effet et potentiellement délétère sur la production de résines.

Un objet de la présente invention est de valoriser les copeaux de caoutchouc issus d'articles en fin de vie afin de produire des matières premières, en particulier des résines, pouvant être utilisées dans la fabrication de pneumatiques neufs sans que cela n'impacte leur performance.

### Description détaillée de l'invention

L'invention concerne au moins l'une des réalisations suivantes :
1. Procédé de production de résines hydrocarbonées à partir d'une charge comprenant des copeaux de caoutchouc, ledit procédé comprenant au moins :
   a. Une étape de pyrolyse des copeaux de caoutchouc opérée à une température comprise entre 300 et 900°C avec une rampe de température croissante, permettant d'obtenir un effluent gazeux, une huile de pyrolyse et un effluent solide, ladite huile de pyrolyse comprenant au moins 1,5% poids de monomères oléfiniques en C₄-C₁₂ ;
   b. Une étape de séparation de l'huile de pyrolyse en au moins un raffinat, une fraction intermédiaire et un extrait, la fraction intermédiaire comprenant au moins 20% poids de monomères oléfiniques en C₄-C₁₂ et au plus 10% poids d'hétéroatomes ;
   c. Une étape de synthèse de résines comprenant une section de polymérisation alimentée au moins par la fraction intermédiaire issue de l'étape b) et par un solvant choisi parmi les solvants aliphatiques, aromatiques, halogénés et leurs mélanges, suivie d'une section de finition produisant un effluent polymérisé ;
   d. Une étape de traitement de l'effluent polymérisé issu de l'étape c) comprenant une section de séparation d'un effluent riche en solvant et d'un effluent riche en résines, et une section de séchage alimentée par l'effluent riche en résines afin de produire un flux de résines hydrocarbonées.
2. Procédé selon la réalisation précédente dans lequel les copeaux de caoutchouc présentent une plus grande longueur allant de 1 à 100 mm, de préférence allant de 1 à 50 mm et de manière préférée allant de 1 à 30 mm.
3. Procédé selon l'une quelconque des réalisations précédentes dans lequel les copeaux de caoutchouc comprennent au moins 50 pce d'élastomère diénique, préférentiellement au moins 60 pce d'élastomère diénique.
4. Procédé selon la réalisation précédente dans lequel l'élastomère diénique est choisi dans le groupe constitué par le caoutchouc naturel, les polyisoprènes de synthèse, les polybutadiènes, les copolymères de butadiène, les copolymères d'isoprène et les mélanges de ces élastomères.
5. Procédé selon l'une quelconque des réalisations précédentes dans lequel les copeaux de caoutchouc sont issus de bandes de roulements de bandages pneumatiques.
6. Procédé selon l'une quelconque des réalisations précédentes dans lequel l'étape de pyrolyse comprend un réacteur de pyrolyse opéré à une température comprise entre 350 et 800°C et de manière préférée entre 350 et 650°C, une pression inférieure à 1 bar et un rapport du temps de séjour du solide au temps de séjour du gaz allant de 10 à 240, préférentiellement de 10 à 120 et très préférentiellement de 10 à 60.
7. Procédé selon l'une quelconque des réalisations précédentes dans lequel l'étape de pyrolyse est alimentée par un flux de gaz inerte.
8. Procédé selon l'une quelconque des réalisations précédentes dans lequel le temps de séjour dans de la fraction solide dans l'étape de pyrolyse va de 3 à 180 min, de préférence de 3 à 120 min.
9. Procédé selon l'une quelconque des réalisations précédentes dans lequel l'étape de pyrolyse est opérée avec une rampe de température croissante comprise entre 1 et 10°C/min.
10. Procédé selon l'une quelconque des réalisations précédentes dans lequel la fraction intermédiaire issue de l'étape b) est une coupe dont la température d'ébullition à pression atmosphérique va de 140 à 280°C, préférentiellement de 150 à 280°C et de manière préférée de 150 à 260°C.
11. Procédé selon l'une quelconque des réalisations précédentes dans lequel la fraction intermédiaire issue de l'étape b) comprend au plus 2% poids, préférentiellement au plus 1,5% poids et de manière préférée moins de 1% poids, très préférentiellement moins de 0,8% poids d'élément soufre.
12. Procédé selon l'une quelconque des réalisations précédentes dans lequel l'étape b) de séparation est réalisée par distillation.
13. Procédé selon la réalisation précédente dans lequel la fraction intermédiaire est obtenue par étêtage suivi d'un équeutage.
14. Procédé selon la réalisation 12 dans lequel l'étape b) de séparation est mise en œuvre dans une colonne à paroi interne, la fraction intermédiaire étant obtenue par soutirage latéral de ladite colonne.
15. Procédé selon l'une des trois réalisations précédentes dans lequel la pression mesurée au condenseur est inférieure ou égale à la pression atmosphérique.
16. Procédé selon l'une quelconque des réalisations précédentes dans lequel la fraction intermédiaire issue de l'étape b) subit un traitement de purification avant d'alimenter l'étape c).
17. Procédé selon la réalisation précédente dans lequel le traitement de purification est mis en œuvre par passage de la fraction intermédiaire sur un lit fixe de silice, d'alumine, de charbon actif, de résines échangeuses d'ions ou d'un mélange de ces constituants.
18. Procédé selon l'une des deux réalisations précédentes dans lequel la teneur en hétéroatomes dans la fraction intermédiaire à l'issue du traitement de purification est inférieure à 2% poids, préférentiellement inférieure à 1% poids, de préférence inférieure à 0,9% poids et de manière préférée inférieure à 0,8% poids.
19. Procédé selon l'une quelconque des réalisations précédentes dans lequel le solvant choisi parmi les solvants aliphatiques, aromatiques, halogénés et leurs mélanges est choisi parmi les solvants aromatiques en C₇-C₁₀, les solvants aliphatiques en C₆-C₈ et les solvants chlorés en C₁-C₂ et leurs mélanges, préférentiellement parmi le toluène, le méthylcyclohéxane et le dichlorométhane.
20. Procédé selon l'une quelconque des réalisations précédentes dans lequel la section de polymérisation est opérée en présence d'un catalyseur acide, préférentiellement choisi parmi un catalyseur de type acide de Bronsted ou acide de Lewis, de préférence un acide de Lewis comprenant des ligands de la famille des halogénures d'aluminium.
21. Procédé selon l'une quelconque des réalisations précédentes dans lequel la section de polymérisation est opérée à une température allant de -60°C à 120°C, préférentiellement allant de -50°C à 100°C, et de manière préférée allant de -40°C à 90°C.
22. Procédé selon l'une quelconque des réalisations précédentes dans lequel le temps de séjour moyen dans la section de polymérisation est compris entre 0,25 h et 6 h.
23. Procédé selon l'une quelconque des réalisations précédentes dans lequel la section de finition de l'étape c) est réalisée par mise en contact avec un flux comprenant un composé stoppeur choisi parmi l'eau, un alcool en C₁-C₃ et leurs mélanges, préférentiellement choisi parmi l'eau, le méthanol, l'éthanol et leurs mélanges, très préférentiellement l'eau à une température comprise entre 5 et 80°C, suivie de la séparation par décantation de phase d'un effluent polymérisé et d'un effluent comprenant majoritairement le composé stoppeur.
24. Procédé selon la réalisation précédente lorsqu'elle dépend de la réalisation 20, ou selon la réalisation précédente lorsqu'elle dépend de la réalisation 20 et de l'une quelconque des réalisations 21 à 22 dans lequel le rapport molaire composé stoppeur sur catalyseur de polymérisation dans la section de finition est au moins égal à 2.
25. Procédé selon l'une des deux réalisations précédentes dans lequel le flux issu de la section de polymérisation et le flux comprenant le composé stoppeur sont mis en contact sous agitation pendant une durée allant préférentiellement de 5 min à 2 h, de manière préférée allant de 15 min à 45 min.
26. Procédé selon l'une des trois réalisations précédentes dans lequel la séparation par décantation de phase est réalisée pendant une durée allant de 5 min à 4 h.
27. Procédé selon l'une quelconque des réalisations précédentes dans lequel la section de séparation de l'étape de traitement de l'effluent polymérisé est réalisée par distillation, coagulation des résines, extraction liquide-liquide ou une association de ces méthodes.
28. Article de caoutchouc fini ou semi-fini comprenant une résine obtenue par le procédé selon l'une quelconque des réalisations précédentes.
29. Bandage pneumatique ou non pneumatique comprenant une résine obtenue par le procédé selon l'une quelconque des réalisations 1 à 27.

### Définitions

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse.

Par composé en Cₙ, on entend un composé comprenant n atomes de carbone. De même, par composés en Cₙ-Cₘ, on entend un ensemble de composés comprenant de n à m atomes de carbone.

Par hétéroatome, on entend un atome autre que le carbone ou l'hydrogène, par exemple l'azote, le soufre, l'oxygène.

### Charge du procédé

Le procédé de production selon l'invention est alimenté à partir d'une charge comprenant des copeaux de caoutchouc.

Par copeau, on entend un élément de petite taille obtenu par découpe d'articles de caoutchouc, préférentiellement d'articles de caoutchouc en fin de vie. Les articles de caoutchouc sont de préférence débarrassés de leurs éléments constitutifs non caoutchoutiques, tels que par exemple les fibres textiles ou les fils métalliques. Les copeaux de caoutchouc ont de préférence une plus grande longueur allant de 1 à 100 mm, de préférence allant de 1 à 50 mm et de manière préférée allant de 1 à 30 mm. Les copeaux peuvent avoir toute forme, mais on préfèrera des copeaux de taille et de forme relativement homogène afin de faciliter la conduite de l'étape de pyrolyse. Cette maitrise de la taille et de la forme est bien connue de l'Homme du métier.

De manière préférée, les copeaux de caoutchouc comprennent au moins 50 pce d'élastomère diénique. Par élastomère (ou indistinctement caoutchouc) "diénique", qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non).

Préférentiellement, l'élastomère diénique est choisi dans le groupe constitué par les polybutadiènes (BR), le caoutchouc naturel (NR), les polyisoprènes de synthèse (IR), les copolymères de butadiène, les copolymères d'isoprène, et les mélanges de ces élastomères. Les copolymères de butadiène sont particulièrement choisis dans le groupe constitué par les copolymères de butadiène-styrène (SBR).

De manière préférée, l'élastomère diénique est un élastomère isoprénique.

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence choisi dans le groupe constitué par le caoutchouc naturel, les polyisoprènes cis-1,4 de synthèse et leurs mélanges ; parmi ces polyisoprènes de synthèse, sont utilisés de préférence des polyisoprènes ayant un taux (% molaire) de liaisons cis-1,4 supérieur à 90%, plus préférentiellement encore supérieur à 98%. De manière préférée et selon l'un quelconque des arrangements de la présente, l'élastomère diénique est le caoutchouc naturel.

Une teneur élevée en élastomère diénique favorise la production de monomères d'intérêt en sortie de pyrolyse, en particulier de limonène.

De manière préférée, les copeaux de caoutchouc sont issus de bandes de roulement de bandages pneumatiques, en particulier issus de bandes de roulement de bandages pneumatiques poids lourds, ces dernières présentant des teneurs élevées en élastomères diéniques, préférentiellement isopréniques, typiquement de 60 à 100 pce d'élastomères isopréniques.

### Étape a) de pyrolyse

La charge comprenant des copeaux de caoutchouc alimente une étape de pyrolyse des copeaux de caoutchouc opérée à une température comprise entre 300 et 900°C avec une rampe de température croissante, permettant d'obtenir un effluent gazeux, une huile de pyrolyse et un effluent solide, ladite huile de pyrolyse comprenant au moins 1,5% poids de monomères oléfiniques en C₄-C₁₂.

L'étape de pyrolyse est préférentiellement opérée à une température comprise entre 350 et 800°C, et de manière préférée entre 350 et 650°C, une pression inférieure à 1 bar et un rapport du temps de séjour du solide au temps de séjour du gaz allant de 10 à 240, préférentiellement de 10 à 120 et très préférentiellement de 10 à 60.

Un faible temps de séjour de la fraction gaz au regard du temps de séjour de la fraction solide permet d'améliorer le rendement en monomères d'intérêt. Le temps de séjour de la fraction gaz peut être diminué en alimentant l'étape de pyrolyse avec un gaz inerte. Cette alimentation préférentielle permet également d'améliorer la désorption des matières volatiles liées à la fraction solide.

Le temps de séjour de la fraction solide dans l'étape de pyrolyse va préférentiellement de 3 à 180 min, de préférence de 3 à 120 min. Le temps de séjour de la fraction gaz est inférieur à 3 min.

Ces conditions particulières permettent de maximiser la production de composés d'intérêt, en particulier de monomères tels que le limonène, ainsi que de fractions gazeuses valorisables comme combustibles et de fractions liquides lourdes utilisables pour la fabrication de noir de carbone.

En particulier, l'utilisation d'une rampe de température croissante permet d'optimiser le rendement et la sélectivité des réactions de pyrolyse vers les monomères d'intérêt. De manière préférée, l'étape de pyrolyse est opérée avec une rampe de température comprise entre 1 et 10°C/min.

L'étape de pyrolyse peut être mise en œuvre dans un réacteur de pyrolyse, et être opérée en continu, semi-continu ou en traitement par lot (« batch » selon la terminologie anglo-saxonne). De tels réacteurs sont bien connus de l'Homme du métier.

Lorsque l'étape de pyrolyse est opérée en continu ou en semi-continu, elle peut être mise en œuvre dans plusieurs zones opérées à des températures croissantes de sorte que le flux traversant ces zones subisse une augmentation de température comprise entre 1 et 10°C/min.

L'effluent de pyrolyse est refroidi de manière à condenser les fractions volatiles. À l'issue de la condensation, trois effluents sont obtenus : un effluent gazeux comprenant les gaz incondensables (c'est-à-dire gazeux dans les conditions normales de température et de pression, à savoir 0°C et 1 atm), un effluent liquide désigné sous le terme « huile de pyrolyse » et un effluent solide.

L'huile de pyrolyse est principalement constituée d'un mélange d'hydrocarbures avec une large gamme de points d'ébullition. La majeure partie de ces composés fait partie de la famille des alcanes, des oléfines, des naphtènes (cycloalcanes) et des aromatiques. Certaines espèces contenant des hétéroatomes sont également présentes.

Les conditions opératoires de l'étape de pyrolyse du procédé selon l'invention permettent d'obtenir une huile de pyrolyse comprenant au moins 1,5% poids de monomères oléfiniques en C₄-C₁₂, de préférence au moins 2% poids de monomères oléfiniques en C₄-C₁₂, de manière préférée au moins 4% poids.

Par monomères oléfiniques on entend des composés hydrocarbonés comprenant des liaisons carbone-carbone insaturées et aptes à polymériser dans des conditions adéquates. Parmi ces monomères oléfiniques, on peut citer le limonène, les terpènes, les oléfines aromatiques telles que styrène, alpha-méthylstyrène, indène, coumarone, les oléfines linéaires ou cycliques telles que le dicyclopentadiène.

L'huile de pyrolyse comprend de préférence au moins 70% poids d'élément carbone, de manière préférée au moins 74% poids et préférentiellement au moins 78% poids.

L'huile de pyrolyse comprend de préférence au plus 5% poids d'élément azote, de manière préférée au plus 3% poids et préférentiellement au plus 1,5% poids.

L'huile de pyrolyse comprend de préférence au plus 2% poids d'élément soufre, de manière préférée au plus 1,5% poids et préférentiellement au plus 1% poids.

### Étape b) de séparation de l'huile de pyrolyse

Le procédé selon l'invention comprend une étape de séparation de l'huile de pyrolyse en au moins un raffinat, une fraction intermédiaire et un extrait, la fraction intermédiaire comprenant au moins 20% poids de monomères oléfiniques en C₄-C₁₂ et au plus 10% poids d'hétéroatomes.

Par extrait, on entend une fraction plus légère, c'est-à-dire dont le point final d'ébullition (ou point de coupe selon la terminologie utilisée en distillation) est moins élevé, que la fraction intermédiaire. Par raffinat, on entend une fraction plus lourde, c'est-à-dire dont le point final d'ébullition est plus élevé, que la fraction intermédiaire.

Les monomères oléfiniques contenus dans l'huile de pyrolyse issue de l'étape de pyrolyse ne peuvent être polymérisés directement. En effet, d'une part leur concentration est trop faible, et d'autre part l'huile comprend de nombreux constituants pouvant être préjudiciables au bon fonctionnement de l'étape de synthèse de résines, en particulier au regard de l'activité du catalyseur.

De manière préférée, la fraction intermédiaire issue de l'étape b) est une coupe dont la température d'ébullition à pression atmosphérique va de 140 à 280°C, préférentiellement de 150 à 280°C et de manière préférée de 150 à 260°C. Cette coupe concentre l'essentiel des monomères oléfiniques d'intérêt, tout en excluant la plupart des composés pouvant avoir un impact négatif sur l'étape de synthèse de résines.

Ladite fraction intermédiaire comprend au moins 20% poids de monomères oléfiniques en C₄-C₁₂ et au plus 10% poids d'hétéroatomes. En particulier, elle comprend du limonène et autres composés de la famille de terpènes, tels que α-pinène, β-pinène, carène, myrcène, farnesène, autres terpènes oxydés ou non, des oléfines aromatiques telles que styrène, alpha-méthylstyrène, indène, coumarone, des oléfines linéaires et cycliques telles que le dicyclopentadiène, mais également des composés inertes vis-à-vis de l'étape de synthèse de résines tels que des hydrocarbures aliphatiques et aromatiques.

De manière préférée, la fraction intermédiaire issue de l'étape b) comprend au plus 2% poids d'élément soufre, préférentiellement au plus 1,5% poids, et de manière préférée moins de 1% poids, très préférentiellement moins de 0,8% poids, ce dernier étant particulièrement préjudiciable à l'étape ultérieure de synthèse de résines.

L'étape de séparation de l'huile de pyrolyse en au moins un raffinat, une fraction intermédiaire et un extrait peut être réalisée par tous moyen connu de l'Homme du métier permettant d'augmenter la concentration en monomères oléfiniques en C₄-C₁₂ et de limiter la teneur en hétéroatomes.

En particulier et de manière préférée, l'étape b) de séparation est réalisée par distillation, celle-ci pouvant être opérée de manière séquentielle (batch) ou continue, en une ou plusieurs étapes intermédiaires.

Ainsi, dans un arrangement préféré, l'étape b) de séparation est réalisée par distillation, la fraction intermédiaire étant obtenue par étêtage suivi d'un équeutage.

Par étêtage, on entend l'élimination d'une fraction légère, dont le point de coupe est préférentiellement inférieur à 140°C, de manière préférée inférieur à 150°C à pression atmosphérique. Par équeutage, on entend l'élimination d'une fraction lourde, dont le point de coupe est préférentiellement supérieur à 280°C, de manière préférée supérieur à 260°C.

Dans un autre arrangement préféré, l'étape b) de séparation est réalisée en une seule étape de distillation, la fraction intermédiaire étant obtenue par soutirage latéral de ladite étape de distillation. Un exemple particulièrement préféré de mise en œuvre de cet arrangement est une mise en œuvre dans une colonne dite « à paroi interne ».

Le raffinat, riche en poly-aromatiques, peut être valorisé pour la production de noir de carbone, par exemple par l'intermédiaire de procédés dits « Haut Fourneau », dont les propriétés et les spécifications sont comparables à celles du noir de carbone produit à partir des matières premières traditionnelles. Il peut être employé pour la manufacture de nouveaux produits caoutchoutiques, tels que les bandages pneumatiques, les bandes transporteuses ou tout article caoutchoutique.

L'extrait, pauvre en composés d'intérêt pour l'étape de synthèse de résines du procédé selon l'invention, peut de manière préférée être utilisé comme solvant, carburant, plastifiant ou être traité dans les procédés de raffinage afin de valoriser les hydrocarbures aromatiques légers (benzène, toluène, xylènes). Les conditions opératoires particulières de l'étape de séparation de l'huile de pyrolyse permettent de concentrer les composés de type hexane, benzène, toluène ainsi que les différents isomères du xylène dans l'extrait, évitant ainsi la présence de ces composés classés « CMR » (Cancérogène, mutagène, reprotoxique) dans l'étape de synthèse, la présence de ces composés rendant par ailleurs la conduite de l'étape de synthèse plus délicate du fait de leur faible température d'ébullition.

Dans le cas préféré où l'étape b) de séparation est mise en œuvre par distillation, celle-ci est préférentiellement réalisée à une pression inférieure ou égale à la pression atmosphérique, de manière préférée inférieure ou égale à 0,5 bar, préférentiellement inférieure ou égale à 0,250 bar.

De manière préférée, la fraction intermédiaire issue de l'étape b) subit un traitement de purification avant d'alimenter l'étape c).

Ce traitement de purification permet, le cas échéant, en particulier d'abaisser la teneur en composés tels que le soufre ou les composés carbonylés avant que la fraction intermédiaire n'alimente une étape c) de synthèse de résines.

Préférentiellement, le traitement de purification est mis en œuvre par passage de la fraction intermédiaire sur un lit fixe de silice, d'alumine, de charbon actif, de résines échangeuses d'ions ou d'un mélange de ces constituants.

Dans l'arrangement dans lequel le traitement de purification est mis en œuvre, la teneur en hétéroatomes dans la fraction intermédiaire à l'issue du traitement de purification est inférieure à 2% poids, préférentiellement inférieure à 1% poids, de préférence inférieure à 0,9% poids et de manière préférée inférieure à 0,8% poids.

### Étape c) de synthèse de résines

Le procédé selon l'invention comprend une étape de synthèse de résines comprenant une section de polymérisation alimentée au moins par la fraction intermédiaire issue de l'étape b) et par un solvant choisi parmi les solvants aliphatiques, aromatiques, halogénés et leurs mélanges, opérée en présence d'un catalyseur acide, suivie d'une section de finition produisant un effluent polymérisé.

L'étape de synthèse de résines consiste principalement à oligomériser les monomères oléfiniques compris dans la fraction intermédiaire alimentant ladite étape de synthèse, et ainsi de préparer de nouveaux matériaux oligomériques de type résines, en contrôlant la macrostructure, notamment en limitant la teneur en composés de basse masse moléculaire, tels que les monomères, les dimères et les trimères, et les composés de haute masse moléculaire, c'est-à-dire dont la masse moléculaire est supérieure à 5000 g/mol, ainsi que la microstructure. Par dimère, on entend un composé comprenant deux monomères liés par une liaison covalente. Un dimère peut être un homodimère, c'est-à-dire la combinaison de deux monomères identiques, un hétérodimère, c'est-à-dire la combinaison de deux monomères différents, ou un mélange d'homodimère et d'hétérodimère. Par trimère, on entend un composé comprenant trois monomères liés par une liaison covalente. Un trimère peut être un homotrimère, c'est-à-dire la combinaison de trois monomères identiques, un hétérotrimères, c'est-à-dire la combinaison d'au moins deux monomères différents, ou un mélange d'homotrimère et d'hétérotrimère.

De manière préférée, la résine obtenue par le procédé selon l'invention comprend moins de 1% poids de composés dont la masse moléculaire est supérieure à 5000 g/mol. Préférentiellement, la résine obtenue comprend au plus 50% poids de composés dimères et trimères.

La section de polymérisation est opérée en l'absence de catalyseur, ou en présence d'un catalyseur acide, de type acide de Bronsted ou acide de Lewis, ledit catalyseur pouvant être homogène ou hétérogène. Préférentiellement, ladite section de polymérisation est opérée en présence d'un catalyseur acide, de type acide de Bronsted ou acide de Lewis. Ladite section de polymérisation peut également être opérée en présence de ligands, d'un co-catalyseur, et/ou d'un amorceur de polymérisation cationique, par exemple de type générateur de protons ou de carbocations.

De préférence, le catalyseur est un acide de Lewis comprenant des ligands de la famille des halogénures d'aluminium. De manière préférée, ces ligands sont choisis parmi les chlorures d'aluminium, par exemple le trichlorure d'aluminium, les chlorures d'alkylaluminium, tels que le chlorure de diéthylaluminium et le dichlorure d'éthylaluminium, et les chlorures d'arylaluminium, tels que le chlorure de phenylaluminium. Préférentiellement, le catalyseur comprend également un co-ligand à caractère base de Lewis, permettant de moduler le caractère acide du ligand acide de Lewis, de type éther aliphatique (par exemple diéthyl éther, dibutyl éther), éther aromatique (diphényl éther), ou ester (acétate d'éthyle) ou encore alkyl amines (triéthylamine) ou arylamines (diphénylamine, triphénylamine). La section de polymérisation peut également être opérée avec des ligands contenant du phosphore, du soufre ou tout autre hétéroatome.

De manière préférée, le solvant choisi parmi les solvants aliphatiques, aromatiques, halogénés et leurs mélanges est choisi parmi les solvants aromatiques en C7-C10, les solvants aliphatiques en C6-C8 et les solvants chlorés en C1-C2 et leurs mélanges, préférentiellement parmi le toluène, méthylcyclohexane et le dichlorométhane.

De manière préférée, l'étape c) de synthèse est alimentée au moins par la fraction intermédiaire issue de l'étape b) et par un solvant de telle sorte que la teneur en monomères soit comprise entre 50 et 75% poids. Ainsi, on peut adapter le débit de solvant de manière à ajuster la teneur en monomères dans l'étape c). Cette teneur permet de limiter l'exothermie au sein de l'étape c), tout en permettant d'obtenir un effluent polymérisé dont la viscosité permet le convoyage vers les étapes aval du procédé de l'invention.

La section de polymérisation est opérée de préférence à une température allant de -60°C à +300°C, préférentiellement allant de -60°C à +120°C, très préférentiellement allant de -50°C à +100°C et de manière préférée allant de -40°C à +90°C et de manière très préférée allant de +20 à +90°C.

Le temps de séjour moyen dans la section de polymérisation est préférentiellement compris entre 0,25 h et 7 h, de manière préférée compris entre 0,5 h et 4 h. Lorsque la section de polymérisation est opérée en continu, le temps de séjour moyen dans ladite section est le rapport du volume réactionnel de ladite section sur le débit volumique des alimentations de la section.

La quantité de catalyseur, incluant les ligands et co-ligands éventuels, est préférentiellement comprise dans un intervalle allant de 0,05% à 5% poids par rapport au poids de monomères oléfiniques en entrée de section de polymérisation, et de manière préférée va de 0,1% à 2% poids par rapport au poids de monomères oléfiniques en entrée de section de polymérisation.

Le flux issu de la section de polymérisation est ensuite traité dans une section de finition produisant un effluent polymérisé.

Cette section de finition permet de stopper la réaction de polymérisation par l'addition d'un composé qui désactive le catalyseur et stoppe les chaînes encore en croissance. La section de finition est préférentiellement mise en œuvre par mise en contact avec un flux comprenant un composé stoppeur choisi parmi l'eau, un alcool en C1-C3 et leurs mélanges, préférentiellement choisi parmi l'eau, le méthanol, l'éthanol et leurs mélanges, très préférentiellement l'eau à une température comprise entre 5 et 80°C, préférentiellement à une température comprise entre 15 et 30°C (par exemple à température ambiante), suivie de la séparation par décantation de phase d'un effluent polymérisé et d'un effluent comprenant majoritairement le composé stoppeur.

Le rapport molaire composé stoppeur sur catalyseur de polymérisation dans la section de finition est au moins égal à 1,1, de préférence au moins égal à 2.

Lorsque le composé stoppeur est l'eau, le rapport volumique milieu réactionnel sur eau dans la section de finition est préférentiellement compris entre 20 :1 et 10 :1, de préférence compris entre 10 :1 et 5 :1 et de manière préférée compris entre 5 :1 et 1 :1.

Le flux issu de la section de polymérisation et le flux comprenant le composé stoppeur sont mis en contact sous agitation pendant une durée allant préférentiellement de 5 min à 2 h, de manière préférée allant de 15 min à 45 min, afin de favoriser la mise en contact du composé stoppeur avec le milieu réactionnel.

À l'issue de cette phase d'agitation, une phase de décantation est réalisée afin de séparer d'une part une phase organique constituant l'effluent polymérisé contenant principalement les résines, le solvant, les monomères non convertis, des dimères, trimères et oligomères de bas poids moléculaires et une phase contenant principalement le composé stoppeur, les résidus catalytiques et des résidus organiques solubles dans le composé stoppeur.

La phase de décantation est préférentiellement réalisée pendant une durée allant de 5 min à 4 h, de manière préférée allant de 15 min à 2 h.

La phase contenant principalement le composé stoppeur peut ensuite être traitée afin de recycler le composé stoppeur dans la section de finition.

L'effluent polymérisé, alimente ensuite l'étape de traitement.

### Étape d) de traitement de l'effluent polymérisé

Le procédé selon l'invention comprend une étape de traitement de l'effluent polymérisé issu de l'étape c) comprenant une section de séparation d'un effluent riche en solvant et d'un effluent riche en résines, et une section de séchage alimentée par l'effluent riche en résines afin de produire les résines.

La mise en œuvre de l'étape de traitement de l'effluent polymérisé dans le procédé selon l'invention permet d'ajuster les caractéristiques des résines, notamment en éliminant les oligomères de faible masse moléculaire (dimères, trimères, tétramères par exemple) et en réduisant la dispersité, afin de contrôler les propriétés des résines obtenues.

La section de séparation d'un effluent riche en solvant et d'un effluent riche en résines permet d'une part de récupérer une majorité du solvant et des monomères non convertis en vue d'une utilisation ultérieure, préférentiellement en vue de leur recyclage dans l'étape de synthèse de résines du procédé selon l'invention, et d'autre part de concentrer les résines dans l'effluent riche en résines.

La section de séparation peut être réalisée par toute méthode connue de l'Homme du métier, en particulier et préférentiellement par évaporation, distillation, coagulation des résines, extraction liquide-liquide ou une association de ces méthodes.

Dans un arrangement préféré, la section de séparation est réalisée par distillation dans au moins une colonne à distiller de manière à produire en tête un effluent riche en solvant et en fond un effluent riche en résines. Cette section permet d'éliminer les monomères et oligomères résiduels en tête ainsi que la majorité du solvant utilisé dans l'étape de synthèse de résines et ainsi d'ajuster la macrostructure des résines ainsi que ses propriétés, par exemple la température de transition vitreuse notée Tg, notamment par réduction de la dispersité en éliminant les composés de basses masses moléculaires. L'effluent riche en résines comprend la majorité des résines alimentant la section de séparation. Le taux de récupération de résines, correspondant au rapport du débit de résines dans l'effluent riche en résines sur le débit de résines dans l'alimentation de la section de séparation, est préférentiellement supérieur à 80%, de manière préférée supérieur à 90%. Ce taux de récupération peut être ajusté en augmentant le nombre d'étages de séparation de la section de séparation, ou bien en ajustant les paramètres opératoires de ladite section, par exemple le taux de reflux.

Dans un autre arrangement préféré, la section de séparation est réalisée par coagulation des résines. Dans cet arrangement, l'effluent polymérisé issu de l'étape c) est mis en contact avec un solvant de coagulation dans lequel les résines ne sont pas solubles afin de faire précipiter celles-ci. Le solvant de coagulation solubilise les monomères résiduels, le solvant utilisé dans l'étape de synthèse de résines et les oligomères de bas poids moléculaire.

Le solvant de coagulation est préférentiellement choisi parmi les solvants polaires protiques ou aprotiques de faible température d'ébullition tels que les alcools, par exemple le méthanol, l'éthanol et l'isopropanol, l'acétone, les éthers, par exemple le tétrahydrofurane (noté THF) et le dioxane.

La section de séparation par coagulation est préférentiellement opérée avec un ratio volumique solvant de coagulation / milieu à coaguler allant de 1:1 à 10:1, de préférence allant de 2:1 à 5:1. La section de séparation par coagulation est préférentiellement opérée à une température allant de 5°C à 40°C.

Le flux comprenant le solvant de coagulation, constituant l'effluent riche en solvant peut ensuite être recyclé, par exemple vers l'étape de synthèse de résines, en subissant au préalable, si nécessaire, une étape de traitement de purification.

Dans un autre arrangement préféré, la section de séparation est réalisée par extraction liquide-liquide. Dans cet arrangement, l'effluent polymérisé issu de l'étape c) est lavé avec un flux comprenant majoritairement de l'eau. Cette extraction peut être réalisée en une ou plusieurs étapes, préférentiellement en une à trois étapes.

L'extraction liquide-liquide peut également être mise en œuvre en amont d'une séparation par distillation ou par coagulation des résines telles que décrites précédemment.

Dans un autre arrangement préféré, la section de séparation est réalisée par évaporation, par exemple par évaporation dans un évaporateur à film raclé.

La viscosité de l'effluent riche en résines dépend de la teneur en résines dans cet effluent et de sa température. Ces teneurs et températures sont donc ajustées de telle sorte que cet effluent puisse être transporté jusqu'à la section de séchage. On peut chercher à maintenir une température élevée pour avoir une teneur élevée en résines tout en conservant une viscosité de l'effluent permettant son transport, en veillant à rester en deçà des températures auxquelles les résines se dégradent thermiquement.

L'effluent riche en résines alimente ensuite une section de séchage dans laquelle il est filtré puis séché. À l'issue de l'étape de séchage, les résines séchées présentent une teneur résiduelle en solvant (regroupant le ou les solvants utilisés dans l'étape de synthèse ainsi que le ou les solvants éventuellement utilisés dans la section de séparation) inférieure à 3% poids, préférentiellement inférieure à 1,5% poids et de manière préférée inférieure à 0,8% poids par rapport à la masse de résines. Les résines séchées présentent une teneur résiduelle en monomères libres inférieure à 5% poids, préférentiellement inférieure à 2% poids et de manière préférée inférieure à 1% poids par rapport à la masse de résines.

Les résines séchées présentent une température de transition vitreuse (notée Tg) allant de -50°C à 180 °C, de préférence de 0 à 160 °C, de préférence de 20 °C à 140 °C. Elles présentent une masse moléculaire moyenne en nombre (notée Mn) inférieure ou égale à 5000 g/mol, de préférence inférieure ou égale à 3000 g/mol, de préférence inférieure à 1500 g/mol. Elles présentent une masse moléculaire moyenne de centrifugation (notée Mz) inférieure ou égale à 10000 g/mol, de préférence inférieure ou égale à 8000 g/mol, de préférence inférieure à 6000 g/mol.

La température de transition vitreuse Tg est mesurée de manière connue par calorimétrie différentielle, ou DSC (Differential Scanning Calorimetry), par exemple et sauf indications différentes spécifiées, selon la norme ISO 11357-2 de 2014.

L'indice de dispersité (noté Ip) des résines séchées est inférieur à 3, de préférence inférieur à 2,5, de préférence inférieur à 2.

La macrostructure (masse molaire moyenne en masse, en nombre, de centrifugation et indice de polydispersité, respectivement notés Mw, Mn, Mz et Ip) est déterminée par chromatographie d'exclusion stérique (SEC) comme indiqué ci-après. La Mz traduit l'équilibre thermodynamique entre la sédimentation et la diffusion et dépend de sa taille. Cette moyenne d'ordre supérieur est utilisée comme indication de la part des hautes masses molaires présentes dans l'échantillon.

Pour rappel, l'analyse SEC, par exemple, consiste à séparer les macromolécules en solution suivant leur taille à travers des colonnes remplies d'un gel poreux ; les molécules sont séparées selon leur volume hydrodynamique, les plus volumineuses étant éluées en premier. L'échantillon à analyser est simplement préalablement solubilisé dans un solvant approprié, le tétrahydrofurane à une concentration de 1 g/litre. Puis la solution est filtrée sur un filtre de porosité 0,45 µm, avant injection dans l'appareillage à un débit de 1 ml/min et une température de 35°C. L'appareillage utilisé est par exemple une chaîne chromatographique "Waters alliance".

Un étalonnage de Moore est conduit avec une série d'étalons commerciaux de polystyrène à faible Ip (inférieur à 1,2), de masses molaires connues, couvrant le domaine de masses à analyser. On déduit des données enregistrées (courbe de distribution massique des masses molaires) Mw, Mn, ainsi que Ip = Mw/Mn.

Toutes les valeurs de masses molaires indiquées dans la présente demande sont donc relatives à des courbes d'étalonnages réalisées avec des étalons de polystyrène.

Les résines séchées peuvent ensuite être mise en forme selon toute méthode connue de l'Homme du métier, selon l'utilisation ultérieure desdites résines. Cette mise en forme peut être réalisée par exemple par granulation.

### Description des figures

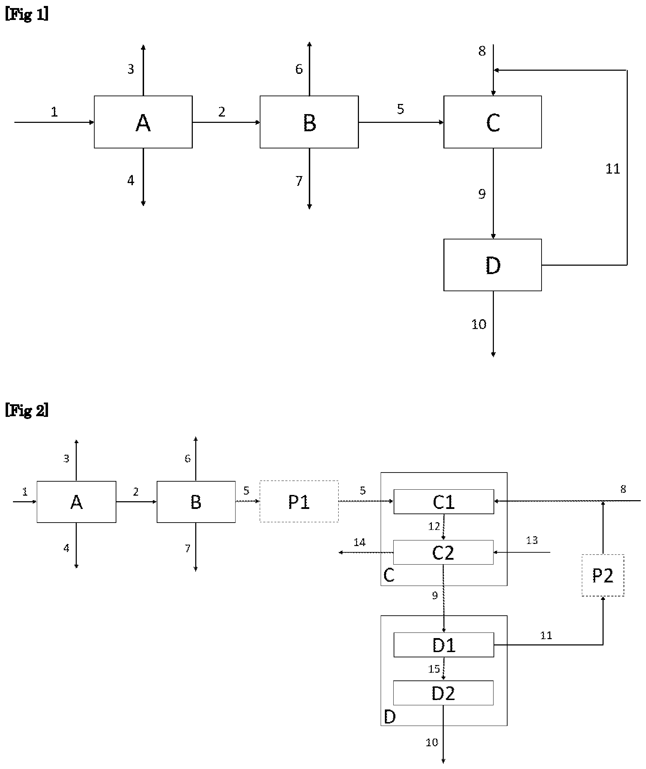

[Fig 1] La figure 1 représente une vue schématique du procédé selon l'invention.

Une charge comprenant des copeaux de caoutchouc (1) alimente une étape (A) de pyrolyse des copeaux de caoutchouc, permettant d'obtenir un effluent gazeux (3), une huile de pyrolyse (2) et un effluent solide (4). L'huile de pyrolyse (2) alimente une étape (B) de séparation de l'huile de pyrolyse (2) en au moins un raffinat (7), une fraction intermédiaire (5) et un extrait (6), la fraction intermédiaire (5) comprenant au moins 20% poids de monomères oléfiniques en C4-C12 et au plus 10% poids d'hétéroatomes. La fraction intermédiaire (5) alimente ensuite une étape de synthèse de résines (C) comprenant une section de polymérisation alimentée au moins par la fraction intermédiaire (5) et par un solvant (8) choisi parmi les solvants aliphatiques, aromatiques, halogénés et leurs mélanges, opérée en présence d'un catalyseur acide, suivie d'une section de finition produisant un effluent polymérisé (9). Cet effluent polymérisé (9) est traité dans une étape de traitement (D) comprenant une section de séparation d'un effluent riche en solvant (11) et d'un effluent riche en résines, et une section de séchage alimentée par l'effluent riche en résines afin de produire un flux de résines hydrocarbonées (10).

[Fig 2] La figure 2 représente une vue schématique du procédé selon l'invention. Les éléments communs avec la figure 1 sont numérotés de façon identique.

Une charge comprenant des copeaux de caoutchouc (1) alimente une étape (A) de pyrolyse des copeaux de caoutchouc, permettant d'obtenir un effluent gazeux (3), une huile de pyrolyse (2) et un effluent solide (4). L'huile de pyrolyse (2) alimente une étape (B) de séparation de l'huile de pyrolyse (2) en au moins un raffinat (7), une fraction intermédiaire (5) et un extrait (6), la fraction intermédiaire (5) comprenant au moins 20% poids de monomères oléfiniques en C4-C12 et au plus 10% poids d'hétéroatomes. La fraction intermédiaire (5) est purifiée dans une étape optionnelle (P1) de purification puis alimente ensuite une étape de synthèse de résines (C) comprenant une section de polymérisation (C1) alimentée au moins par la fraction intermédiaire (5) et par un solvant (8) choisi parmi les solvants aliphatiques, aromatiques, halogénés et leurs mélanges, opérée en présence d'un catalyseur acide de manière à produire un flux issu de la section de polymérisation (12), ce flux alimentant une section de finition (C2) produisant un effluent polymérisé (9). La section de finition (C2) est également alimentée par un flux comprenant un composé stoppeur (13) et produit un effluent comprenant majoritairement le composé stoppeur (14). L'effluent polymérisé (9) est traité dans une étape de traitement (D) dans laquelle il alimente une section de séparation (D1) d'un effluent riche en solvant (11) et d'un effluent riche en résines (15), ce dernier alimentant une section de séchage (D2) qui produit un flux de résines hydrocarbonées (10). L'effluent riche en solvant (11) peut alimenter un traitement de purification optionnelle (P2) afin d'être réutilisé dans le procédé selon l'invention.

### Exemple 1

On décrit ci-dessous une mise en œuvre du procédé selon l'invention.

### Étape de pyrolyse

Une étape de pyrolyse de copeaux de caoutchouc est alimentée par des copeaux présentant un diamètre moyen de 1 mm environ et une densité de 504 kg/m³, issus du broyage de pneumatiques de poids lourds toutes dimensions et multi-marques. Ces copeaux présentent une teneur en élastomères isopréniques de 65% poids.

L'étape de pyrolyse est opérée sous atmosphère inerte d'azote, dans un réacteur composé de 3 sections chauffées indépendamment à des températures respectivement de 425°C, 550°C et 775°C, donc présentant un profil de température croissant.

On sépare en sortie de réacteur un effluent gazeux, une huile de pyrolyse et un effluent liquide avec les rendements respectifs suivant (débit effluent / débit alimentation) : 13,5%, 44,5% et 42%. L'huile de pyrolyse comprend environ 4% poids plusieurs monomères d'intérêt, dont du styrène, du méthylstyrène, de l'indène, du beta-pinène et du limonène.

### Étape de séparation de l'huile de pyrolyse

L'huile de pyrolyse alimente une étape de séparation par distillation opérée en deux sections à pression atmosphérique. Dans une première section, on sépare une coupe légère, dont la température initiale d'ébullition est inférieure à 160°C, constituant l'extrait. La fraction plus lourde alimente une deuxième section permettant de produire un raffinat dont le point de coupe est de 280°C, c'est-à-dire dont la température d'ébullition initiale est de 280°C à pression atmosphérique, et une coupe intermédiaire constituant la fraction intermédiaire. La teneur en monomères oléfiniques dans cette fraction est d'environ 33% poids, dont 24,3% poids de limonène, 2 ,8% poids de styrène et 3% poids d'indène.

### Étape de synthèse de résines

La fraction intermédiaire alimente une étape de synthèse de résines. Du chlorure d'aluminium (2mol% par rapport à la teneur en monomères) est introduit dans un réacteur sous atmosphère inerte. Le réacteur est alors conservé sous atmosphère inerte tout au long de la réaction.

La fraction intermédiaire est enrichie en limonène par apport d'un flux externe de limonène biosourcé de manière à atteindre une teneur en monomères oléfiniques de 70% poids. Ce mélange est alors injecté dans le réacteur en présence d'un solvant toluène. La quantité de solvant toluène est ajustée de sorte que la teneur en monomères soit comprise entre 50 et 75% poids, ici 58% poids. Le milieu est agité et opéré à une température de 25°C pendant 2 h. La réaction est ensuite stoppée par ajout d'eau.

Le milieu réactionnel, constituant l'effluent polymérisé, est séparé en un effluent riche en solvant et un effluent riche en résines par lavage à l'eau et coagulation des résines au méthanol. L'effluent riche en résines est ensuite séché en étuve à 175°C pendant 24 h. Une résine est récupérée sous forme d'un solide translucide jaune/orangé.

Cette résine présente une température de transition vitreuse Tg=25°C.

### Exemple 2 - Mise en œuvre d'un traitement de purification

On réalise l'ensemble des étapes décrites dans l'exemple 1 avec la modification suivante :
À l'issue de l'étape de séparation de l'huile de pyrolyse, la fraction intermédiaire alimente un traitement de purification par passage sur billes d'alumine. Le ratio débit massique de fraction intermédiaire en kg/h sur la masse d'alumine est égal à 1 h⁻¹. La fraction intermédiaire en sortie du lit de billes d'alumines alimente ensuite l'étape de synthèse de résines telle que décrite dans l'exemple 1.

Une résine est récupérée sous forme d'un solide translucide jaune/orangé et présentant une masse molaire moyenne en nombre Mn=770 g/mol, un indice de polydispersité Ip=1,2 et une température de transition vitreuse Tg=92°C.

## Revendications

1. Procédé de production de résines hydrocarbonées à partir d'une charge comprenant des copeaux de caoutchouc, ledit procédé comprenant au moins :
a. Une étape de pyrolyse des copeaux de caoutchouc opérée à une température comprise entre 300 et 900°C avec une rampe de température croissante, permettant d'obtenir un effluent gazeux, une huile de pyrolyse et un effluent solide, ladite huile de pyrolyse comprenant au moins 1,5% poids de monomères oléfiniques en C₄-C₁₂ ;
b. Une étape de séparation de l'huile de pyrolyse en au moins un raffinat, une fraction intermédiaire et un extrait, la fraction intermédiaire comprenant au moins 20% poids de monomères oléfiniques en C₄-C₁₂ et au plus 10% poids d'hétéroatomes ;
c. Une étape de synthèse de résines comprenant une section de polymérisation alimentée au moins par la fraction intermédiaire issue de l'étape b) et par un solvant choisi parmi les solvants aliphatiques, aromatiques, halogénés et leurs mélanges, suivie d'une section de finition produisant un effluent polymérisé ;
d. Une étape de traitement de l'effluent polymérisé issu de l'étape c) comprenant une section de séparation d'un effluent riche en solvant et d'un effluent riche en résines, et une section de séchage alimentée par l'effluent riche en résines afin de produire un flux de résines hydrocarbonées.

2. Procédé selon la revendication précédente dans lequel les copeaux de caoutchouc comprennent au moins 50 pce d'élastomère diénique, préférentiellement au moins 60 pce d'élastomère diénique.

3. Procédé selon la revendication précédente dans lequel l'élastomère diénique est choisi dans le groupe constitué par le caoutchouc naturel, les polyisoprènes de synthèse, les polybutadiènes, les copolymères de butadiène, les copolymères d'isoprène et les mélanges de ces élastomères.

4. Procédé selon l'une quelconque des revendications précédentes dans lequel l'étape de pyrolyse comprend un réacteur de pyrolyse opéré à une température comprise entre 350 et 800°C et de manière préférée entre 350 et 650°C, une pression inférieure à 1 bar et un rapport du temps de séjour du solide au temps de séjour du gaz allant de 10 à 240, préférentiellement de 10 à 120 et très préférentiellement de 10 à 60.

5. Procédé selon l'une quelconque des revendications précédentes dans lequel l'étape de pyrolyse est opérée avec une rampe de température croissante comprise entre 1 et 10°C/min.

6. Procédé selon l'une quelconque des revendications précédentes dans lequel la fraction intermédiaire issue de l'étape b) comprend au plus 2% poids, préférentiellement au plus 1,5% poids et de manière préférée moins de 1% poids, très préférentiellement moins de 0,8% poids d'élément soufre.

7. Procédé selon l'une quelconque des revendications précédentes dans lequel l'étape b) de séparation est réalisée par distillation.

8. Procédé selon la revendication 7 dans lequel l'étape b) de séparation est mise en œuvre dans une colonne à paroi interne, la fraction intermédiaire étant obtenue par soutirage latéral de ladite colonne.

9. Procédé selon l'une quelconque des revendications précédentes dans lequel la fraction intermédiaire issue de l'étape b) subit un traitement de purification avant d'alimenter l'étape c).

10. Procédé selon la revendication précédente dans lequel la teneur en hétéroatomes dans la fraction intermédiaire à l'issue du traitement de purification est inférieure à 2% poids, préférentiellement inférieure à 1% poids, de préférence inférieure à 0,9% poids et de manière préférée inférieure à 0,8% poids.

11. Procédé selon l'une quelconque des revendications précédentes dans lequel le solvant choisi parmi les solvants aliphatiques, aromatiques, halogénés et leurs mélanges est choisi parmi les solvants aromatiques en C₇-C₁₀, les solvants aliphatiques en C₆-C₈ et les solvants chlorés en C₁-C₂ et leurs mélanges, préférentiellement parmi le toluène, le méthylcyclohéxane et le dichlorométhane.

12. Procédé selon l'une quelconque des revendications précédentes dans lequel la section de polymérisation est opérée en présence d'un catalyseur acide, préférentiellement choisi parmi un catalyseur de type acide de Bronsted ou acide de Lewis, de préférence un acide de Lewis comprenant des ligands de la famille des halogénures d'aluminium.

13. Procédé selon l'une quelconque des revendications précédentes dans lequel la section de finition de l'étape c) est réalisée par mise en contact avec un flux comprenant un composé stoppeur choisi parmi l'eau, un alcool en C₁-C₃ et leurs mélanges, préférentiellement choisi parmi l'eau, le méthanol, l'éthanol et leurs mélanges, très préférentiellement l'eau à une température comprise entre 5 et 80°C, suivie de la séparation par décantation de phase d'un effluent polymérisé et d'un effluent comprenant majoritairement le composé stoppeur.

14. Article de caoutchouc fini ou semi-fini comprenant une résine obtenue par le procédé selon l'une quelconque des revendications précédentes.

15. Bandage pneumatique ou non pneumatique comprenant une résine obtenue par le procédé selon l'une quelconque des revendications 1 à 13.

## Patentansprüche

1. Verfahren zur Herstellung von Kohlenwasserstoffharzen aus einem Einsatzstoff, der Kautschukschnitzel umfasst, wobei das Verfahren mindestens Folgendes umfasst:
a. einen Schritt der Pyrolyse der Kautschukschnitzel, der bei einer Temperatur zwischen 300 und 900 °C mit einer Rampe zunehmender Temperatur durchgeführt wird, wodurch ein gasförmiger Austragsstrom, ein Pyrolyseöl und ein fester Austragsstrom erhalten werden können, wobei das Pyrolyseöl mindestens 1,5 Gew.-% olefinische C₄-C₁₂-Monomere umfasst;
b. einen Schritt der Trennung des Pyrolyseöls in mindestens ein Raffinat, eine intermediäre Fraktion und einen Extrakt, wobei die intermediäre Fraktion mindestens 20 Gew.-% olefinische C₄-C₁₂-Monomere und höchstens 10 Gew.-% Heteroatome umfasst;
c. einen Harzsyntheseschritt, umfassend einen Polymerisationsabschnitt, der mindestens mit der intermediären Fraktion aus Schritt b) und mit einem aus aliphatischen, aromatischen und halogenierten Lösungsmitteln und Mischungen davon ausgewählten Lösungsmittel gespeist wird, gefolgt von einem Endbearbeitungsabschnitt, der einen polymerisierten Austragsstrom ergibt;
d. einen Schritt der Behandlung des polymerisierten Austragsstroms aus Schritt c), umfassend einen Abschnitt zur Trennung eines lösungsmittelreichen Austragsstroms und eines harzreichen Austragsstroms und einen Trocknungsabschnitt, der mit dem harzreichen Austragsstrom gespeist wird, zur Erzeugung eines Stroms von Kohlenwasserstoffharzen.

2. Verfahren nach dem vorhergehenden Anspruch, wobei die Kautschukschnitzel mindestens 50 phe Dienelastomer, vorzugsweise mindestens 60 phe Dienelastomer, umfassen.

3. Verfahren nach dem vorhergehenden Anspruch, wobei das Dienelastomer aus der Gruppe bestehend aus Naturkautschuk, synthetischen Polyisoprenen, Polybutadienen, Butadien-Copolymeren, Isopren-Copolymeren und Mischungen dieser Elastomere ausgewählt ist.

4. Verfahren nach einem der vorhergehenden Ansprüche, wobei der Pyrolyseschritt einen Pyrolysereaktor umfasst, der bei einer Temperatur zwischen 350 und 800 °C und vorzugsweise zwischen 350 und 650 °C, einem Druck von weniger als 1 bar und einem Verhältnis der Verweilzeit des Feststoffs zur Verweilzeit des Gases von 10 bis 240, bevorzugt von 10 bis 120 und sehr bevorzugt von 10 bis 60 betrieben wird.

5. Verfahren nach einem der vorhergehenden Ansprüche, wobei der Pyrolyseschritt mit einer Rampe zunehmender Temperatur zwischen 1 und 10 °C/min durchgeführt wird.

6. Verfahren nach einem der vorhergehenden Ansprüche, wobei die intermediäre Fraktion aus Schritt b) höchstens 2 Gew.-%, bevorzugt höchstens 1,5 Gew.-% und vorzugsweise weniger als 1 Gew.-%, sehr bevorzugt weniger als 0,8 Gew.-%, Schwefelelement umfasst.

7. Verfahren nach einem der vorhergehenden Ansprüche, wobei der Trennungsschritt b) durch Destillation durchgeführt wird.

8. Verfahren nach Anspruch 7, wobei der Trennungsschritt b) in einer Säule mit einer Innenwand durchgeführt wird, wobei die intermediäre Fraktion durch seitliches Abziehen aus der Säule erhalten wird.

9. Verfahren nach einem der vorhergehenden Ansprüche, wobei die intermediäre Fraktion aus Schritt b) vor der Einspeisung in Schritt c) einer Reinigungsbehandlung unterzogen wird.

10. Verfahren nach dem vorhergehenden Anspruch, wobei der Gehalt an Heteroatomen in der intermediären Fraktion am Ende der Reinigungsbehandlung weniger als 2 Gew.-%, bevorzugt weniger als 1 Gew.-%, bevorzugt weniger als 0,9 Gew.-% und vorzugsweise weniger als 0,8 Gew.-% beträgt.

11. Verfahren nach einem der vorhergehenden Ansprüche, wobei das aus aliphatischen, aromatischen und halogenierten Lösungsmitteln und Mischungen davon ausgewählte Lösungsmittel aus aromatischen C₇-C₁₀-Lösungsmitteln, aliphatischen C₆-C₁₀-Lösungsmitteln und chlorierten C₁-C₂-Lösungsmitteln und Mischungen davon, bevorzugt aus Toluol, Methylcyclohexan und Dichlormethan, ausgewählt wird.

12. Verfahren nach einem der vorhergehenden Ansprüche, wobei der Polymerisationsabschnitt in Gegenwart eines sauren Katalysators, der bevorzugt aus einem Katalysator vom Brönsted-Säure- oder Lewis-Säure-Typ, bevorzugt einer Lewis-Säure mit Liganden der Aluminiumhalogenidfamilie, ausgewählt wird, durchgeführt wird.

13. Verfahren nach einem der vorhergehenden Ansprüche, wobei der Endbearbeitungsabschnitt von Schritt c) durch Inkontaktbringen mit einem Strom, der eine Stoppverbindung, die aus Wasser, einem C₁-C₃-Alkohol und Mischungen davon ausgewählt wird, bevorzugt aus Wasser, Methanol, Ethanol und Mischungen davon ausgewählt wird, sehr bevorzugt Wasser, umfasst, bei einer Temperatur zwischen 5 und 80 °C, gefolgt von einer Trennung durch Phasenscheidung eines polymerisierten Austragsstroms und eines Austragsstroms, der hauptsächlich die Stoppverbindung umfasst, durchgeführt wird.

14. Kautschukerzeugnis oder -halbzeug, umfassend ein durch das Verfahren nach einem der vorhergehenden Ansprüche erhaltenes Harz.

15. Luftreifen oder Vollreifen, umfassend ein durch das Verfahren nach einem der Ansprüche 1 bis 13 erhaltenes Harz.

## Claims

1. Method of production of hydrocarbon-containing resins starting from a charge comprising rubber chips, said method comprising at least:
a. A step of pyrolysis of the rubber chips carried out at a temperature between 300 and 900°C with an increasing temperature ramp, giving a gaseous effluent, a pyrolysis oil and a solid effluent, said pyrolysis oil comprising at least 1.5 wt% of C₄-C₁₂ olefinic monomers;
b. A step of separation of the pyrolysis oil into at least one raffinate, an intermediate fraction and an extract, the intermediate fraction comprising at least 20 wt% of C₄-C₁₂ olefinic monomers and at most 10 wt% of heteroatoms;
c. A resin synthesis step comprising a polymerization section supplied at least with the intermediate fraction resulting from step b) and with a solvent selected from aliphatic, aromatic and halogenated solvents and mixtures thereof, followed by a finishing section producing a polymerized effluent;
d. A step of treatment of the polymerized effluent resulting from step c) comprising a section for separation of an effluent rich in solvent and an effluent rich in resins, and a drying section supplied with the resin-rich effluent in order to produce a stream of hydrocarbon-containing resins.

2. Method according to the preceding claim, in which the rubber chips comprise at least 50 phr of diene elastomer, preferably at least 60 phr of diene elastomer.

3. Method according to the preceding claim, in which the diene elastomer is selected from the group consisting of natural rubber, synthetic polyisoprenes, polybutadienes, butadiene copolymers, isoprene copolymers and mixtures of these elastomers.

4. Method according to any one of the preceding claims, in which the pyrolysis step comprises a pyrolysis reactor operated at a temperature between 350 and 800°C and preferably between 350 and 650°C, a pressure below 1 bar and a ratio of the residence time of the solid to the residence time of the gas from 10 to 240, preferably from 10 to 120 and very preferably from 10 to 60.

5. Method according to any one of the preceding claims, in which the pyrolysis step is carried out with an increasing temperature ramp between 1 and 10°C/min.

6. Method according to any one of the preceding claims, in which the intermediate fraction resulting from step b) comprises at most 2 wt%, preferably at most 1.5 wt% and preferably less than 1 wt%, very preferably less than 0.8 wt% of sulphur element.

7. Method according to any one of the preceding claims, in which the separation step b) is carried out by distillation.

8. Method according to claim 7, in which the separation step b) is carried out in a column with an internal wall, the intermediate fraction being obtained by side-stream draw-off from said column.

9. Method according to any one of the preceding claims, in which the intermediate fraction resulting from step b) undergoes a purification treatment before supplying step c).

10. Method according to the preceding claim, in which the content of heteroatoms in the intermediate fraction at the end of the purification treatment is below 2 wt%, preferably below 1 wt%, preferably below 0.9 wt% and preferably below 0.8 wt%.

11. Method according to any one of the preceding claims, in which the solvent selected from aliphatic, aromatic and halogenated solvents and mixtures thereof is selected from C₇-C₁₀ aromatic solvents, C₆-C₈ aliphatic solvents and C₁-C₂ chlorinated solvents and mixtures thereof, preferably from toluene, methylcyclohexane and dichloromethane.

12. Method according to any one of the preceding claims, in which the polymerization section is operated in the presence of an acid catalyst, preferably selected from a catalyst of the Brønsted acid or Lewis acid type, preferably a Lewis acid comprising ligands of the aluminium halide family.

13. Method according to any one of the preceding claims, in which the finishing section of step c) is carried out by contacting with a stream comprising a stopper compound selected from water, a C₁-C₃ alcohol and mixtures thereof, preferably selected from water, methanol, ethanol and mixtures thereof, very preferably water, at a temperature between 5 and 80°C, followed by separation by phase decanting of a polymerized effluent and an effluent comprising predominantly the stopper compound.

14. Finished or semi-finished rubber article comprising a resin obtained by the method according to any one of the preceding claims.

15. Pneumatic or non-pneumatic tyre comprising a resin obtained by the method according to any one of claims 1 to 13.
